# EUROPEAN PATENT SPECIFICATION

(11) **EP 0 575 667 B1**
(45) Date of publication and mention of the grant of the patent: **08.03.2000**
(21) Application number: 92201905.4
(22) Date of filing: 26.06.1992
(51) Int. Cl.: C08F 8/08, C08F 8/48, C08F 220/28

(54) **Process for the manufacture of polymers having spiro orthoester groups, the polymers obtained and their use**
Verfahren zur Herstellung von Spiroorthoestergruppen enthaltenden Polymeren, daraus erhaltenen Polymeren und Verwendung davon
Procédé de préparation de polymères renfermant des groupements spiroortho-ester, polymères obtenus et leur application

(43) Date of publication of application: 29.12.1993
(73) Proprietor: THE PROCTER & GAMBLE COMPANY, Cincinnati, Ohio 45202 (US)
(72) Inventor: Zamzow, Manfred, W-5100 Aachen (DE); Höcker, H., W-5100 Aachen (DE)
(74) Representative: Canonici, Jean-Jacques

(56) References cited:
- CHEMICAL ABSTRACTS, vol. 105, no. 12, September 1986, Columbus, Ohio, US; abstract no. 98177x, L. HAASE 'HOMOPOLYMERS WITH SPIROORTHOESTER GROUPS' page 16 ;column 1 ;
- PATENT ABSTRACTS OF JAPAN vol. 8, no. 24 (C-208)(1461) 2 February 1984
- CHEMICAL ABSTRACTS, vol. 108, no. 24, June 1988, Columbus, Ohio, US; abstract no. 205281n, L. HAASE 'PREPARATION OF HOMOPOLYMERS OF SPIRO ORTHO ESTERS' page 13 ;column 1 ;

## Description

The subject matter of the present application is a process for the manufacture of polymers having repeating units comprising spiro orthoester groups, the polymers obtained thereby and their use for the manufacture of strain free composites, high strength adhesives, additives to other monomer mixtures to control the amount of shrinkage or expansion upon polymerization and specifically in dental filling materials.

US-A-4 387 215 already discloses that polymers formed by the polymerization of polycyclic ring-opening monomers, such as monomers comprising spiro orthoester groups, spiro orthocarbonate groups and polycyclic ketal lactone groups show near zero shrinkage or expansion during polymerization and are therefore usable for the manufacture of strain-free composites, high strength adhesive, precision castings and specifically binders for propellants.

The subject matter of DE-A-24 8 597 is a method for the manufacture of homopolymers comprising spiro orthoester groups of the following formula 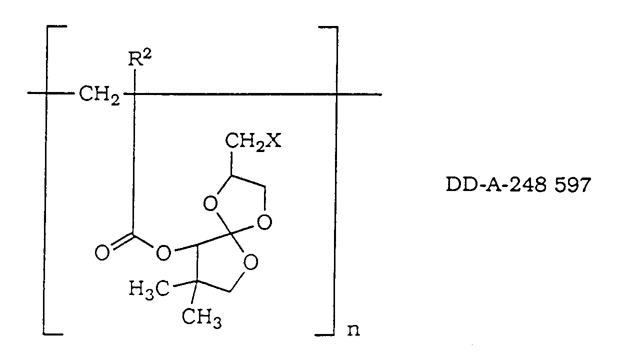 wherein R² is hydrogen or methyl and X is halogen.

Said homopolymers are stated to be useful as adhesives, casting resins, protection coatings and for dental materials. The homopolymers are manufactured by the radical polymerization of 2-halomethyl-8,8-dimethyl-9-(meth)acryloyloxy-1,4,6-trioxaspiro[4.4]nonanes. However, this process is not fully satisfying with respect both to the manufacture of the starting materials and their polymerization.

DD-233,577 and DD-275,062 disclose similar homopolymers, wherein X is -H, -CH₂OPh, -CH₂OiBu or wherein CH₂X is replaced by the same groups. Essentially the same process is used for their manufacture.

The object of the present invention therefore is the provision of an improved process for the manufacture of polymers having repeating units comprising spiro orthoester groups which provides the products from easily available starting products with high purity and high yields, novel polymers obtained thereby and their use.

The subject matter of the present application therefore is the process according to claim 1. The subclaims comprise preferred embodiments of this process, novel polymers obtainable by this process and the use of these polymers.

The subject matter of the present invention therefore is a process for the manufacture of polymers having repeating units comprising spiro ortho - ester groups of the following general formula I 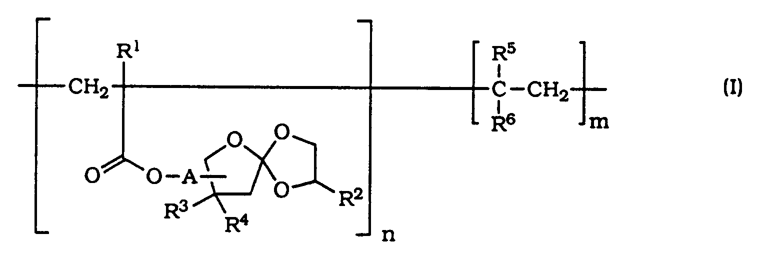 wherein
A is C₁₋₆-alkylene, C₁₋₆-alkyleneoxycarbonyl or an oxygen-carbon bond.
R¹ is hydrogen or methyl,
R² is C₁₋₆-alkyl or C₁₋₆-alkyl substituted by C₁₋₆-alkoxy or aryloxy,
R³ and R⁴ independently are hydrogen or C₁₋₆-alkyl,
R⁵ is hydrogen or methyl,
R⁶ is hydrogen, methyl, phenyl, carboxy, carboxy-C₁₋₆-alkyl, carboxamido or cyano,
n is an integer >1 and
m is 0 or an integer ≥ 1, with the proviso that the molecular weight of
the polymer is between 500 and 1 000 000,
which is characterized by reacting a polymer having repeating units comprising lactone groups of the following general formula II 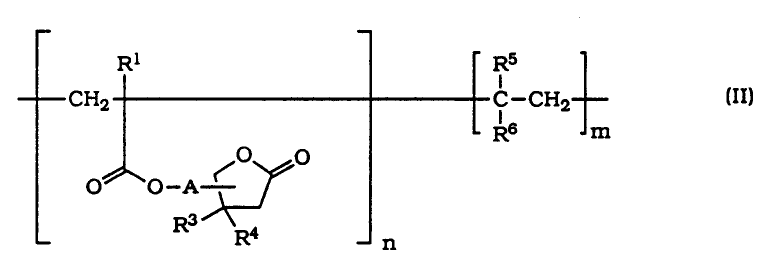 wherein A, R¹, R³, R⁴, R⁵, R⁶, n and m are as defined above, with an oxirane compound of the following general formula III 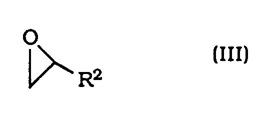 wherein R² is as defined above.

According to a preferred embodiment A is a methylene group, an ethylene oxycarbonyl group or an oxygen-carbon bond. R¹ preferably is methyl, R² preferably is C₁₋₆-alkyl substituted by phenoxy and more preferably phenoxymethyl. R³ and R⁴ preferably are hydrogen or methyl. R⁵ preferably is hydrogen or methyl. Preferably m is 0 and n is an integer such that the molecular weight of the polymer is between 500 and 500,000, more preferably between 1,000 and 50,000 and most preferably between 25,000 and 45,000.

According to a preferred embodiment of the process of the present invention the reaction is carried out in an organic solvent, such as benzene, dichloromethane, trichloroethylene, dichloroethylene, carbontetrachloride, chlorobenzene, nitrobenzene and cyclohexane, more preferably in anyone of the halogenated organic solvents inert to the reaction and most preferably in dichloromethane. The reaction of the starting material of formula (II) with the oxirane compound of the general formula (III) is preferably carried out in the presence of a catalyst or more preferably in the presence of a Lewis acid catalyst, such as boron trifluoride, boron trifluoride etherate, aluminum trichloride, tin dichloride, tin tetrachloride, titanium tetrachloride and iron trichloride. The reaction can be carried out at room temperature at a reaction time of 1 to 5 hours, preferably 2 to 4 hours.

According to a further preferred embodiment of the present invention, the starting compound of general formula (II) is manufactured by radical polymerization of a 2-oxo-tetrahydrofurane derivative of the following general formula (IV) 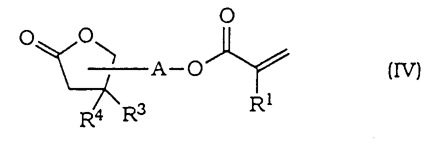 wherein A, R¹, R³ and R⁴ are as defined above. For the manufacture of a copolymer of the above formula (I), wherein m is an integer of ≥ 1, polymerization is carried out in the presence of a copolymerizable monomer of the following general formula (V) 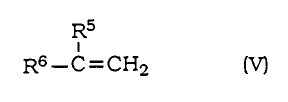 wherein R⁵ and R⁶ are as defined above. Specifically preferred copolymerizable monomers of formula (V) are ethylene, propylene, (meth)acrylic acid and the esters thereof, acrylonitrile, acrylamide, styrene and the like.

The polymerization yielding the starting compounds of formula (II) is preferably carried out in solution in an inert organic solvent and in the presence of a radical forming catalyst. As the organic solvent preferably an aromatic solvent, such as toluene is used. As the catalyst a free radical forming catalyst useful for such polymerizations can be used, such as a peroxide catalyst or more preferably azobisisobutyronitrile.

The subject matter of the present application further are copolymers having repeating units comprising spiro orthoester groups of the following general formula (I) 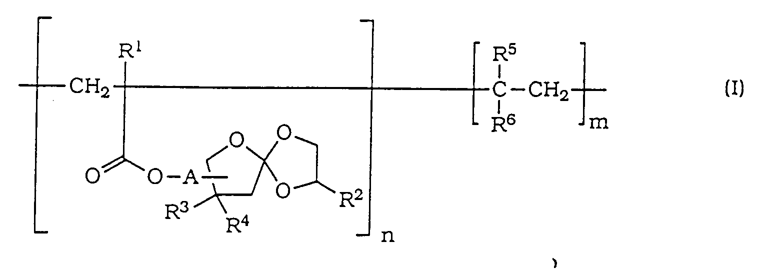 wherein A, R¹, R², R³, R⁴, R⁵, R⁶, m and n are as defined above, save that m ≥ 1; and homopolymers having repeating units comprising spiro orthoester groups of the following general formula VI 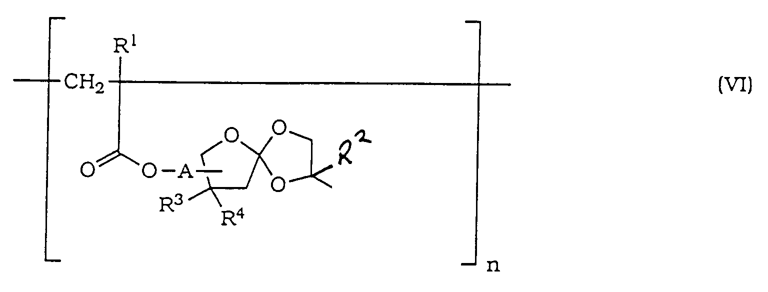 wherein
A is C₁₋₆-alkylene, C₁₋₆-alkyleneoxycarbonyl or an oxygen-carbon bond, R² is C₁₋₆-alkyl or C₁₋₆-alkyl substituted by C₁₋₆-alkoxy or aryloxy,
R¹ is hydrogen or methyl,
R³ and R⁴ independently are hydrogen or C₁₋₆-alkyl,
n is an integer >1 with the proviso that the molecular weight of the polymer is between 500 and 1,000,000.

The process of the present invention is specifically advantageous, in that the polymers haying useful properties are easy to synthesize from readily available starting material and provides the products with high yield and high purity. The 2-oxo-tetrahydrofurane derivatives of the following general formula (IV) 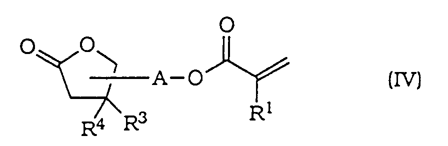 wherein A, R¹, R³ and R⁴ are as defined above, can be manufactured with ease by reacting the corresponding lactone of formula (IVa) 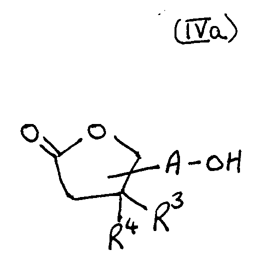 with (meth)acryloyl chloride.

Specifically preferred homopolymers corresponding to the above general formula (VI) are the following:

Homopolymers having repeating units comprising Spiro orthoester groups of the following general formula (VII) 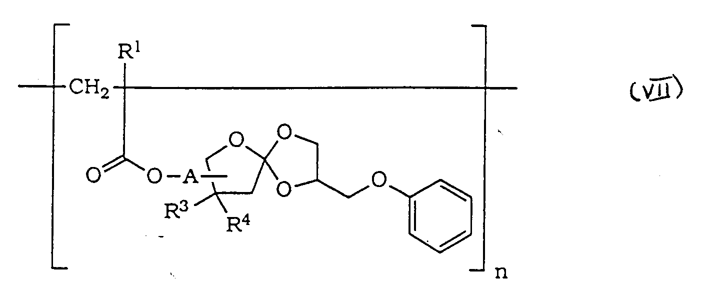 wherein
A is C₁₋₆-alkylene, C₁₋₆-alkyleneoxycarbonyl or an oxygen-carbon bond,
R¹ is hydrogen or methyl,
R³ and R⁴ independently are hydrogen or C₁₋₆-alkyl,
n is an integer >1 with the proviso that the molecular weight of the polymer is between 3 000 and 50 000,

poly-{1-methyl-1-[2-(phenoxymethyl)-1,4,6-trioxaspiro[4.4]nonane-7-yl]methoxycarbonyl]ethylenes} having the formula 4 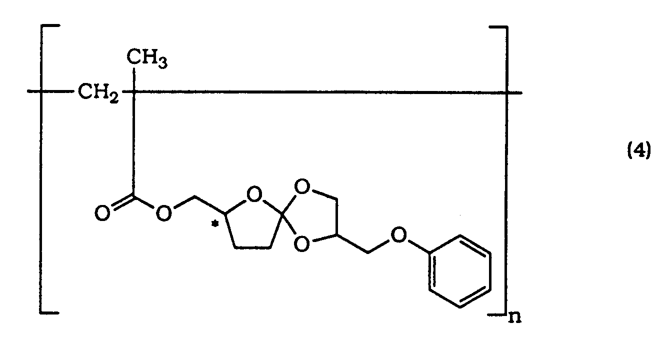 and a molecular weight in the range of 5 000 to 500 000, preferably 20 000 to 40 000.

poly-{1-methyl-1-[2-(phenoxymethyl)-1,4,6-trioxaspiro[4.4]nonane-7-yl]carbonyloxy-ethoxycarbonyl]ethylenes} having the formula 8 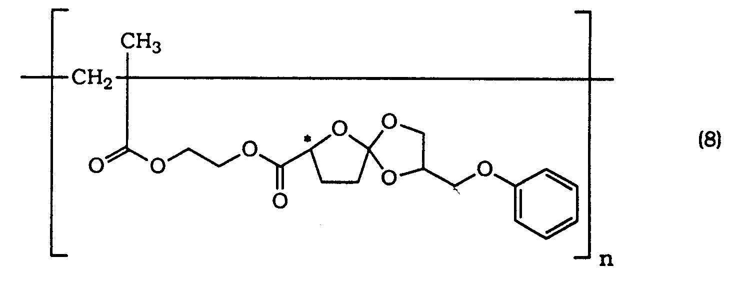 and a molecular weight in the range of 5 000 to 50 000, and

poly-{1-methyl-1-[2-(phenoxymethyl)-8,8-dimethyl-1,4,6-trioxaspiro[4.4]nonane-9-yl]oxycarbonyl]ethylenes} having the formula 12 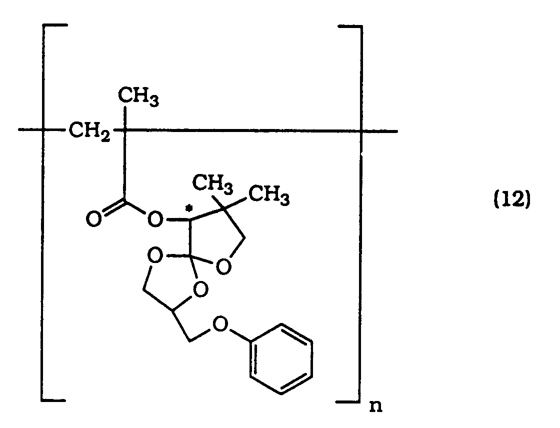 and a molecular weight in the range of 5 000 to 500 000, preferably 20 000 to 40 000.

The above homopolymers preferably have a molecular weight in the range of 5,000 to 50,000, more preferably between 10,000 and 40,000 and even more preferred between 25,000 and 35,000.

The polymers of the present invention comprise pending spiro orthoester groups, which can be subjected to ring opening polymerization. As is known from US-A-4 387 215, this ring-opening polymerization has the effect that the polymer does in contrast to normal polymerization not show shrinkage but no shrinkage or even slight expansion caused by the ring opening, as can be demonstrated by the following scheme, showing that in dependency from the attack of the electrophilic agent at the 0-1 atom or 0-4 atom two different polymer structures are obtained:

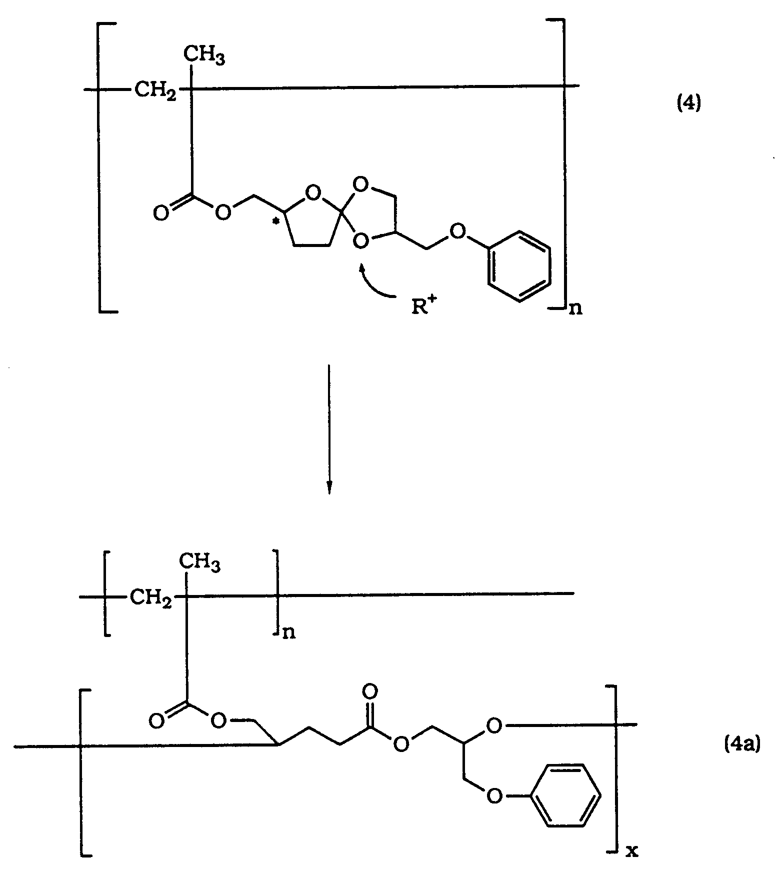

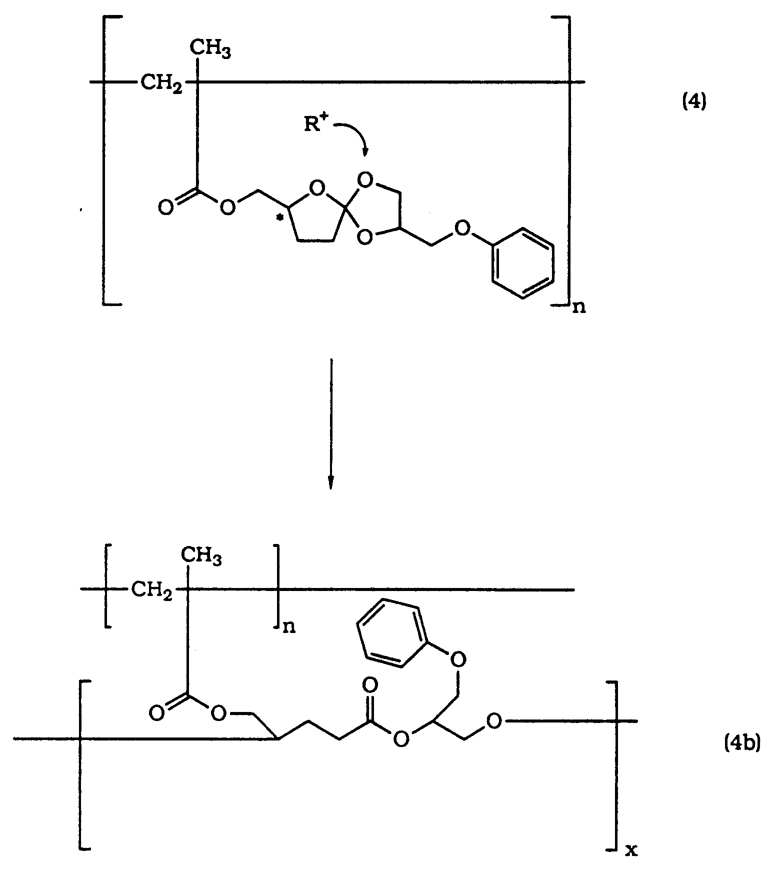

Therefore, the polymers of the present invention are highly advantageous, in that they can be used to provide strain free hardenable compositions providing hardened products, which have a controlled amount of shrinkage or expansion, an effect very desirable for example in dental filling compositions, which should most closely fit to the tooth to be restored.

The properties of the polymers of the present invention can be controlled as desired by the proper selection of the pending spiro orthoester groups and the fact as to whether copolymerizable monomers are present and what kind of copolymerizable monomers they are. On the basis of these copolymerizable monomers further properties of the corresponding copolymers can be provided.

The preferred homopolymers of the present invention can be used as such or blended with other polymers, fillers, reinforcing fibers and additives usual for the manufacture of composites and casting resins and specifically dental filling compositions. Therefore, the present invention provides for the possibility of tailoring the polymers according to the desired properties of the final hardened product.

A further subject matter of the present invention therefore is the use of the above polymers which are capable of expanding upon reaction of the spiro orthoester groups for the manufacture of strain free composites, high strength adhesives, as additives to other monomer mixtures to control the amount of shrinkage or expansion upon polymerization and specifically for the manufacture of dental filling materials. For this type of utility, the polymers of the present invention are mixed with usual fillers, pigments, hardeners and usual additives.

During their use the polymers of the present invention are subjected to a ring opening polymerization providing the expansion of the polymer. This polymerization is preferably initiated by catalysts which generate cations during radiation. As such catalysts diaryliodonium salts, organometallic salts, such as (β⁵-2,4-cyclopentadiene-1-yl)[(1,2,3,4,5,6-β)-(1-methyl-ethyl)-benzene]-iron(I)hexyfluorophosphate and triarylsulfonium salts may be used. These catalysts are mixed with polymers and additional components. such as pigments, fillers and etc., brought to the desired shape, such as the filling of a cavity in a tooth, and are then subjected to the ring opening polymerization by irradiation with actinic light, such as ultraviolet light.

The present invention can be explained more in detail by making reference to the following examples.

### Example 1

### Poly-{1-methyl-1-[2-(phenoxymethyl)-1,4,6-trioxaspiro[4.4]nonane-7-yl]methoxycarbonyl]ethylene}

### a) synthesis of 5-(methacryloyloxymethyl)-2-oxo-tetrahydrofurane (2)

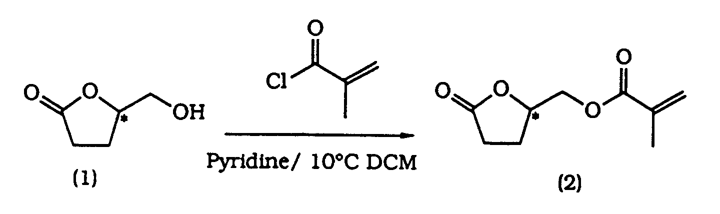

5-Hydroxymethyl-2-oxo-tetrahydrofurane (1) was obtained according to the method of R.M. Silverstein (Tetrahedron, 34, (1978) 1449). To the alcohol (10,1 g, 87 mmol) were added 100 ml dichloromethane and 8,4 ml (104 mmol) pyridine; the mixture was cooled to -10°C. Then a solution of 40 ml dichloromethane and 8,3 ml (87 mmol) methacryloyl chloride were added dropwise during a period of 1.5 h. The solution was stirred overnight at room temperature. The solvent was evaporated and the residue was chromatographed on silica gel (ethylacetate/hexane (2 : 1)).
Yield: 13.4 g = 83,5 %
IR-spectrum: (ν cm⁻¹, KBr)
   2959 (CH₃); 2934 (CH₂); 1779 (C = O, lactone); 1720 (C = O); 1637 (C = C); 1153 (C - O); 1074 (C-O-C); 886 (= CH₂).
¹H-NMR-spectrum: (δ in ppm, 200 MHz, CDCl₃)
   6.14 (m, 1H, = CH₂ cis); 5.63 (m, 1H = CH₂ trans), 4.8 (m, 1H, CH); 4.32 (d/d, 2H, CH₂O); 2.61 (m, 2H, CH₂); 2.39 (m, 2H, CH₂); 1.95 (t, 3H, CH₃).
¹³C-NMR-spectrum: (δ in ppm, 50.3 MHz, CDCl₃)
   176.4 (C = O, lactone); 166.7 (C = O); 135.5 (C - CH₃); 126.3 (= CH₂); 77.2 (CH₂ - O); 65.4 (O-CH-CH₂); 28.0 (C^{δ}); 23.8 (c^{β}); 16.1 (CH₃).

### b) Radical polymerization of 5-(methacryloyloxyymethyl)-2-oxo-tetrahydrofurane (2)

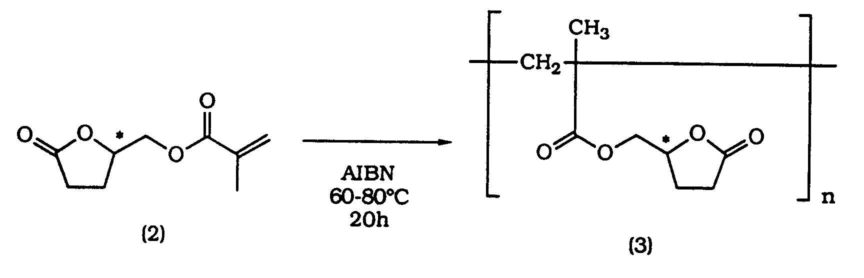

To a solution of 1.8 g (9.7 mmol) 5-(methacryloyloxymethyl)-2-oxo-tetrahydrofurane (2) were added 40 ml toluene and 15.9 mg (1 mol%) azobisisobutyronitrile (AIBN). The mixture was heated to 70°C on an oil bath for 20h and then the solvent was evaporated. The oily product was dissolved in 5 ml dichloromethane and precipitated in hexane. The colorless polymer was filtered and dried in vacuo.
Yield: 1,66 g = 92%.
IR-spectrum: (ν In cm⁻¹, KBr)
   2955 (CH₃); 1778 (C = O, lactone); 1731 (C = O); 1156 (C - O); 1071 (C-O-C).
¹H-NMR-spectrum: (δ in ppm. 200 MHz. DMSO-d₆. T = 100°C)
   4.9 - 4.65 (m, 1H, CH); 4.3 - 3.9 (m, 2H, CH₂O); 2.64 - 2,23 (m, 4H, CH₂); 2.18 - 1.68 (m, 2H, CH₂ - CCH₃); 1.18 - 0.75 (s, 3H, CH₃).
¹³C-NMR-spectrum: (δ in ppm. 50.3 MHz, DMSO-d₆, T = 100°C)
   175.8 (C = O, lactone); 175.2 (C = O); 76.2 (CH₂ - O); 65.6 (C^{γ}); 44.1 (C-CH₃); 27.1 (C^{α}); 22.9 (C^{β}); 16.1, 16.7 (CH₂-C-CH₃).

### c) Synthesis of poly{1-methyl-1[2-(phenoxymethyl)-1,4,6-trioxaspiro [4.4]nonane-7-yl]methyloxycarbonyl}ethylene (4) via polymer analogous reaction

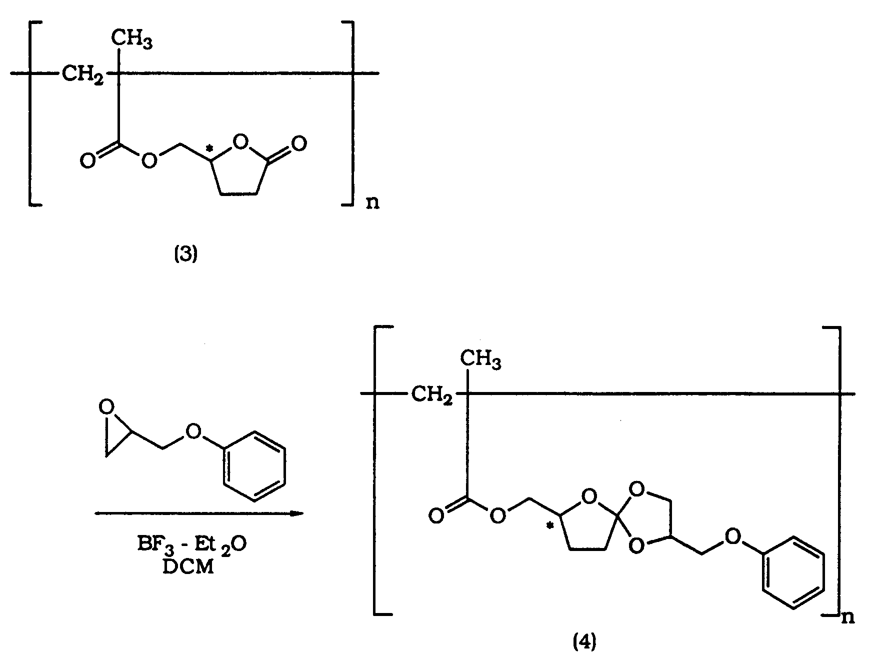

To a solution of 1.4 g (7.4 mmol) poly{-methyl-1[(2-oxotetrahydrofurane-5-yl)methyloxycarbonyl]}ethylene (3) were added 80 ml dichloromethane, 4 ml (30 mmol) 2,3-epoxypropylphenylether and 0.15 ml borontrifluoride etherate. The mixture was stirred at room temperature for 4 h, and the catalyst hydrolized with 5 ml aqueous sodium hydroxide, the organic layer was separated, dried and concentrated and the polymer precipitated by pouring the solution in ethanol.
IR-spectrum: (ν in cm⁻¹, KBr)
   3032 (CH, arom.); 2944 (CH₃); 1779 (C = O, lactone); 1732 (C = O); 1599 (C-C, arom.); 1152 (C-O-C); 756 (CH, arom.), 692 (CH, arom.).
¹H-NMR-spectrum: (δ in ppm, 200 MHz, CDCl₃)
   7.36-7.08 (m, 2H, H arom.); 7.00 - 6.71 (m, 3H, H arom.); 4.86 - 4.45 (m, 1H) 4.27 - 4.09 (m, 2H, CH₂-O-C=O); 4.09-3.09 (m, 5H, CH, CH₂); 2.64-1.64 (m, 4H, CH₂); 1.45 - 1.16 (m, 2H, CH₂-CCH₃); 1.16 - 0.68( m, 3H, CH₃).

### Example 2

### Poly-{1-methyl-1-[2-(phenoxymethyl]-1,4,6-trioxaspiro[4.4]nonane-7-yl]carbonyloxy-ethoxycarbonyl]ethylene}

### a) Synthesis of 5-{[2-(methacryloyloxy)ethyloxy]carbonyl}-2-oxo-tetrahydrofurane (6)

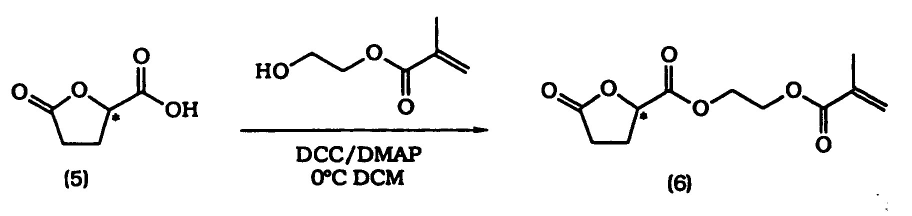

The starting carboxylic acid (5) was synthesized according to the method of C. Herdeis (Synthesis. 232 (1986)). 6.5 g (50 mmol) of the carboxylic acid (5) were dissolved in 300 ml dichloromethane and cooled to - 10°C. To the solution were added 11.4 g (55 mmol) dicyclohexylcarbodiimide, 6.7 ml (55 mmol) hydroxyethyl methacrylate and 0.61 g (5 mmol) N,N'-dimethylamino pyridine (DMAP). The mixture was stirred overnight, the dicyclohexylurea filtered off and the resulting filtrate extracted with water (3 times), acetic acid and again with water. The organic layer was dried with Na₂SO₄ and the solvent evaporated. The solid was chromatographed on silica gel (dichloromethane/ethylacetate (9 : 1).
Yield: 10.8 g = 89.2 %
IR-spectrum: (ν in cm⁻¹, KBr)
   2968 (CH₃); 1789 (C = O, lactone); 1748 (C = O); 1631 (C = C); 1154 (C - O); 1064 (C-O-C).
¹N-NMR-spectrum: (δ in ppm, 90 MHz, CDCl₃)
   6.15 (s, 1H, = CH₂); 5.6 (m, 1H, = CH₂); 4.95 (m; 1H, CH-O); 4.4 (s, 4H, CH₂-O); 2.6 (m, 4H, CH₂); 1.95 (s, 3H, CH₃),
¹³C-NMR-spectrum: (δ in ppm, 50.3 MHz, CDCl₃)
   175.8(C = O, lactone); 169.6(C = O); 165.6(C = O); 131.5(CH = CH₂): 127.6 (=CH₂); 75.4 (CH); 63.3 (CH₂-O); 61.6 (CH₂-O); 26.5 (CH₂); 25.6 (CH₂); 16.1 (CH₃).

### b) Polymerization of 5-{[2-methacryloyloxy)ethyloxy]carbonyl}-2-oxo-tetrahydrofurane (6)

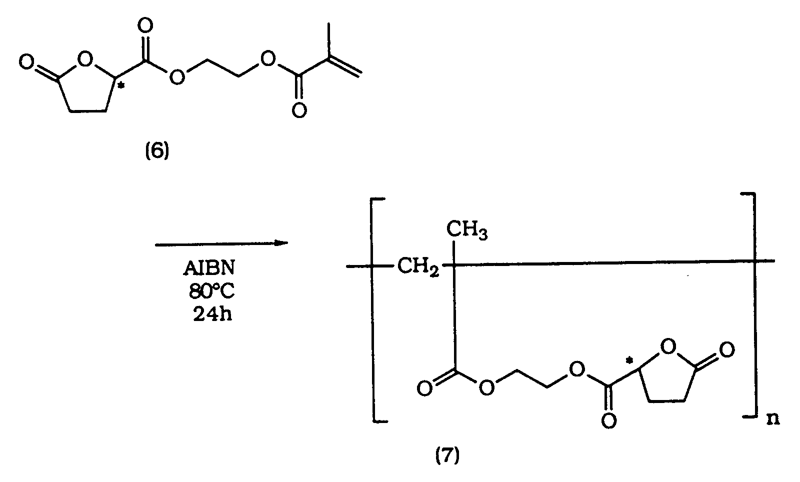

To a solution of 1.4 g (5.8 mmol) of (6) were added 50 ml toluene and 0.95 mg (0.1 mol%) AIBN. The mixture was heated to 80°C on an oil bath for 24 h. The solvent was removed under reduced pressure, the product dissolved in 5 ml dichloromethane and precipitated in hexane. The polymer was filtered and dried in vacuo.
Yield: 1.25 g = 89.3%
IR-spectrum: (ν in ppm, KBr)
   2966 (CH₃); 1790 (C = O, lactone); 1706 (C = O); 1694 (C = O); 1145 (C-O); 1061 (C-O-C)
¹H-NMR-spectrum: (δ in ppm, 200 MHz, DMSO-d₆)
   5.35 (m, 1H, C^{γ}H); 3.7 (m, 4H, O-CH₂-CH₂-O); 2.6-2.36 (m, 2H, C^{α}H₂); 2.36-1.86 (m, 2H, CH^{β}H); 1.86-1.45 (m, 2H, CH₂); 1.2 (m, 3H, CH₃).
¹³C-NMR-spectrum: (δ in ppm, 75,4 MHz, DMSO-d₆)
   176.33 (C = O, lactone); 175.31 (C = O, ester); 169.7 (C=O, ester); 75.9 (CH); 62.58 (d,CH₂-CH₂-O); 44.37 (CH₂-C(CH₃)); 44.05 (C(CH₃)); 26.4 (CH₂); 25.15 (CH₂); 18.06 (CH₃).

### c) Polymer analogous reaction of 5-{1-methyl-1-[2-(2-oxo-tetrahydrofurane-2-yl)carbonyloxy]ethyloxycarbonyl}ethylene (7) with 2,3-epoxy-propylphenylether

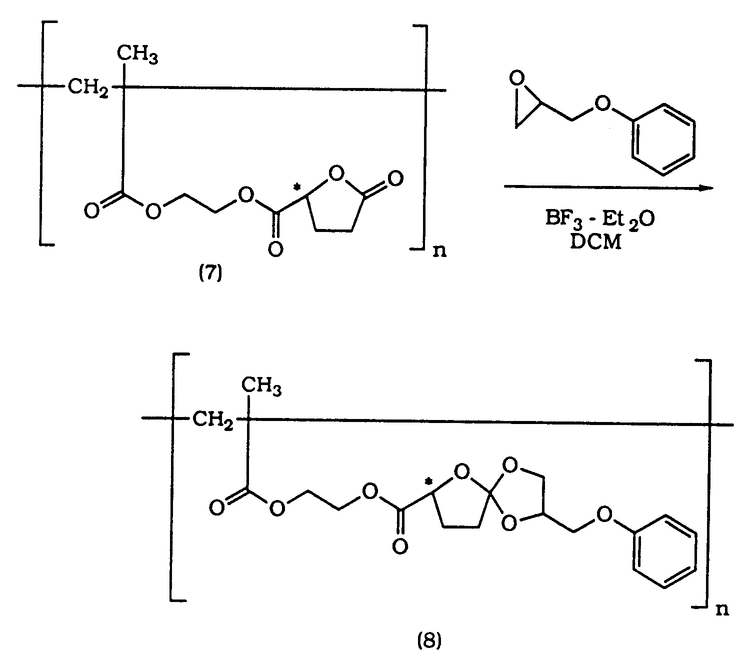

To a solution of 0.75 g (3.1 mmol) poly{1-methyl-1[2-(5-oxotetrahydrofurane-2-yl)carbonyloxy]ethyloxycarbonyl}ethylene (7) was added 60 ml dichloromethane, 1.7 ml (12.4 mmol) 2,3-epoxypropylphenylether and 0.15 ml borontrifluoride etherate. The mixture was stirred at room temperature for 4 h, the catalyst hydrolized with 5 ml of aqueous sodium hydroxide. The organic layer was separated, dried, concentrated and the polymer was precipitated by pouring the solution in ethanol.
IR-spectrum (ν in cm⁻¹, KBr)
   3031 (CH,arom.); 2944 (CH₃); 1779 (C = O, lactone); 1706 (C = O); 1693 (C = O); 1599 (C-C arom.); 1152 (C-O-C); 756 (CH, arom.); 692 (CH, arom.).
¹H-NMR-spectrum: (δ in ppm, 200 MHz, CDCl₃)
   7.3 (m, 2H, H arom.); 6.9 (m, 3H, H arom.); 4.3-3.7 (m, 10H, CH₂O); 2.23-1.84 (m, 4H, CH₂); 1.27 (m, 2H, CH₂-CCH₃); 0.9 (m, 3H, CH₃).

### Example 3

### Poly-{1-methyl-1-[2-(phenoxymethyl)-8,8-dimethyl-1,4,6-trioxaspiro[4.4]nonane-9-yl]oxycarbonyl]ethylene}

### a) Synthesis of 4,4-Dimethyl-3-methacryloyloxy-2-oxo-tetrahydrofurane (10)

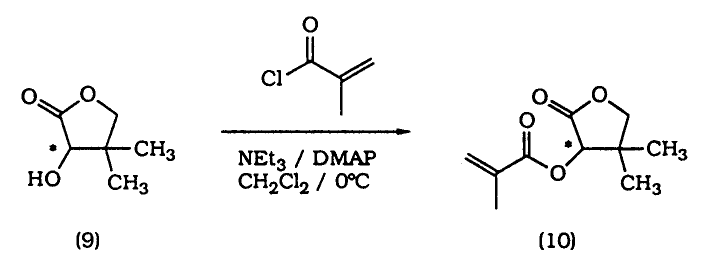

8,2 g 4,4-Dimethyl-3-hydroxy-2-oxo-tetrahydrofurane (9), 10.45 ml triethylamine (NEt₃), 0.77 g 4-dimethylamino-pyridine (DMAP) were dissolved in 120 ml dichloromethane. At 0°C 6,02 ml methacryloyl chloride were added dropwise and stirred for 3 h. After filtration the reaction mixture was extracted with saturated sodium hydrogen carbonate, potassium hydrogen sulfate and saturated sodium chloride, dried (Na₂SO₄), filtered and concentrated by solvent removal under reduced pressure. The obtained pale yellow product was purified by column chromatography on silica-gel 60 (Merck, 70-230 mesh), elution with dichloromethane/ethylacetate (9 : 1).
Yield: 8,32 g ≈ 66,6 %
¹H-NMR-spectrum (CDCl₃): δ = 1.2 (-C(CH₃)₂-,2s,6H); 2.0 (-CH₃, s, 3H); 4.1 (-CH₂, s, 2H); 5.45 (-CH-, s, 1H); 5.7 (=CH, m, 1H), 6.25 (=CH, m, 1H)
IR-spectrum (KBr) (ν in cm⁻¹): 3108 (w, s, =CH); 2970-2880 (s, aliphat. CH); 1792 (s, s, O-C=O, lactone); 1727 (s, s, C=O); 1638 (s, s C=C); 1350-1050 (s, C-O-C).

### b) Poly-[4,4-dimethyl-3-methacryloyloxy-2-oxo-tetrahydrofurane] (11)

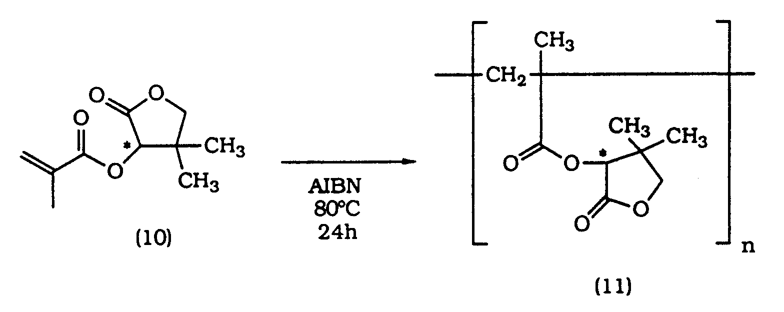

1.5 g of 4,4-dimethyl-3-methacryloyloxy-2-oxo-tetrahydrofurane (10) and 6.2 mg azobisisobutyronitrile (AIBN) were dissolved in 75 ml THF and heated to 80°C. The polymerizatlon was carried out for 24 h in a constant temperature bath. The polymer was precipitated in hexane. The molecular weight of polymer (11) determined by gel-permeation chromatography was M_{W} = 18000.
- Yield:: 1.08 g = 72 % polymer
0.35 g = 23 % oligomers

¹H-NMR-spectrum (CDCl₃): d = 1.2 (m, CH₃, 9H); 2.11 (m, CH₂, 2H); 4.03 (s, CH₂O, 2H); 5.28 (s, OCHC=O, 1 H)
IR-spectrum (KBr), (ν in cm⁻¹): 2970-2880 (s, aliphat. CH); 1794(s,s, O-C=O, lactone); 1741 (s, s, C=O); 1350-1050 (s, C-O-C).

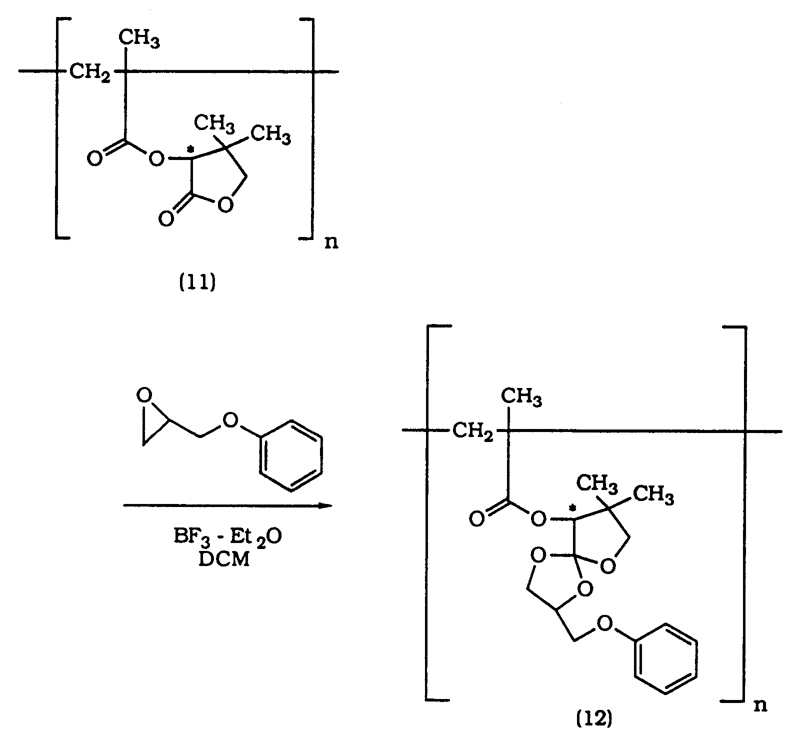

### c) Polymer analogous reaction of (II) with phenoxymethyloxirane

1.5 g poly(4,4-dimethyl-3-methacryloyloxy-2-oxo-tetrahydrofurane) (11) and 4.1 ml phenoxymethyloxirane were dissolved in 60 ml dichloromethane, 0.15 ml boron trifluoride etherate were added and the reaction mixture was stirred for 3 h. The mixture was extracted with sodium hydroxide and the organic layer was dried with Na₂SO₄ and evaporated. The polymer was precipitated in hexane.

The molecular weight of polymer (12) determined by gel-permeation chromatography- was M_{W} = 35000.
Yield: 1.81 g
¹H-NMR-spectrum (DMSO-d₆) δ: 1.2 (m, CH₃, 9H); 2.1 (m, CH₂, 2H); 3.3-5.4 (m, CH₂, CH, 8H); 6.9 (m, C₆H₅, 3H); 7.2 (m, C₆H₅, 2H).
IR-spectrum (KBr) (ν in cm⁻¹): 3060, 3039 (w, =C-H); 2967-2878 (s, aliphat. C-H); 1794(s,s, O-C=O, lactone); 1738 (s,s, C=O); 1600(s,s, arC-C); 1350-1050 (s, C-O-C); 756, 692 (s. s, arC-H).
¹H-NMR spectra were recorded on a CXP -200 FT-NMR and the IR-spectra on a FTIR 60 SRX-spectrometer.
Gel-permeation chromatography analysis were carried out using a Waters apparatus with UV-detector and a Melz apparatus to detect the refractive index.

Molecular weights were determined by gel-permeation chromatography using THF as eluent and calibration with PMMA standards.

## Claims

1. A process for the manufacture of polymers having repeating units comprising spiro orthoester groups of the following general formula I 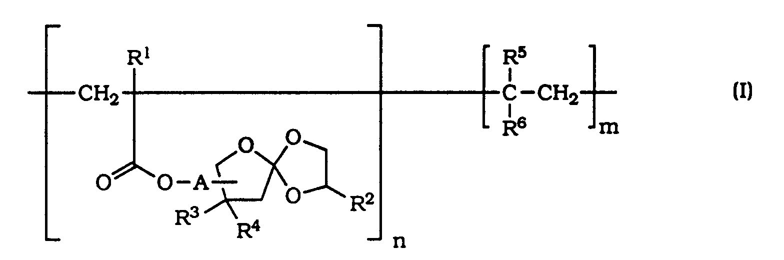 wherein
A is C₁₋₆-alkylene, C₁₋₆-alkyleneoxycarbonyl or an oxygen-carbon bond,
R¹ is hydrogen or methyl,
R² is C₁₋₆-alkyl or C₁₋₆-alkyl substituted by C₁₋₆-alkoxy or aryloxy,
R³ and R⁴ independently are hydrogen or C₁₋₆-alkyl,
R⁵ is hydrogen or methyl,
R⁶ is hydrogen, methyl, phenyl, carboxy, carboxy-C₁₋₆-alkyl, carboxamido or cyano.
n is an integer >1 and
m is 0 or an integer >1, with the proviso that the molecular weight of the polymer is between 500 and 1 000 000.
**characterized by** reacting a polymer having repeating units comprising lactone groups of the following general formula II 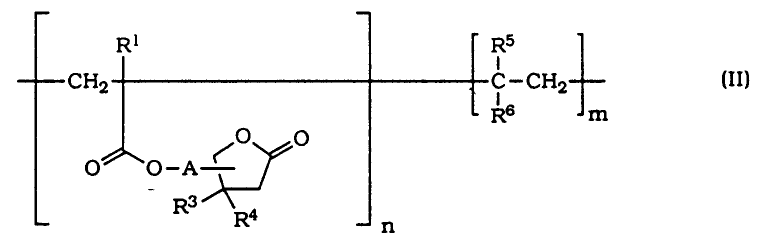 wherein A, R¹, R³, R⁴, R⁵, R⁶, n and m are as defined above, with an oxirane compound of the following general formula III 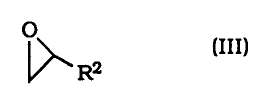 wherein R² is as defined above.

2. The process according to claim 1, **characterized in that** the reaction is carried out in a polar organic solvent and in the presence of a catalyst.

3. The process according to claim 2, **characterized in that** the reaction is carried out in a halogenated organic solvent and in the presence of a Lewis acid catalyst.

4. The process according to claim 3, **characterized in that** the reaction is carried out in dichloromethane and in the presence borontrifluoride etherate as the catalyst.

5. The process according to any one of claims 1 to 4, **characterized in that** the reaction is carried out at room temperature.

6. The process according to any one of claims 1 to 5, **characterized in that** the starting compound of general formula II is manufactured by radical polymerization of a 2-oxo-tetrahydrofurane derivative of the following general formula IV 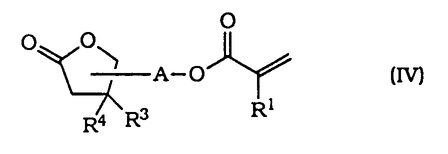 wherein A, R¹, R³ and R⁴are as defined in claim 1, if desired in the presence of a copolymerizable monomer of the general formula V 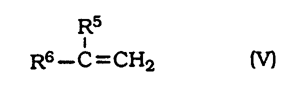 wherein R⁵ and R⁶ are as defined in claim 1.

7. The process according to claim 6, **characterized in that** the polymerization is carried out in solution in an inert organic solvent and in the presence of a radical forming catalyst.

8. The process according to claim 7, **characterized in that** an aromatic solvent and a a peroxide catalyst or azobisisobuytronitrile are used.

9. Copolymers having repeating units comprising spiro orthoester groups of the following general formula I 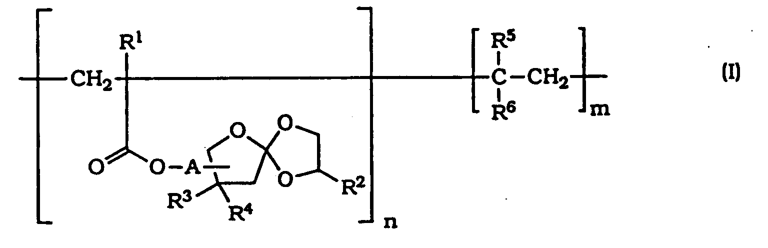 wherein
A is C₁₋₆-alkylene, C₁₋₆-alkyleneoxycarbonyl or an oxygen-carbon bond,
R¹ is hydrogen or methyl,
R² is C₁₋₆-alkyl or C₁₋₆-alkyl substituted by C₁₋₆-alkoxy or aryloxy,
R³ and R⁴ independently are hydrogen or C₁₋₆-alkyl,
R⁵ is hydrogen or methyl,
R⁶ is hydrogen, methyl, phenyl, carboxy, carboxy-C₁₋₆-alkyl, carboxamido or cyano,
n is an integer >1 and
m is an integer ≥1, with the proviso that the molecular weight of the polymer is between 500 and 1 000 000.

10. Homopolymers having repeating units comprising spiro orthoester groups of the following general formula (VI) 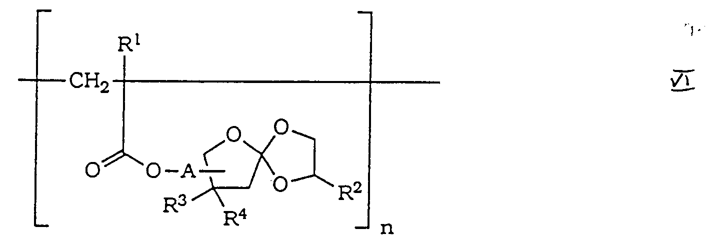 wherein
A is C₁₋₆-alkylene or C₁₋₆-alkyleneoxycarbonyl
R¹ is hydrogen or methyl,
R² is C₁₋₆-alkyl or C₁₋₆-alkyl substituted by C₁₋₆-alkoxy or aryloxy,
R³ and R⁴ independently are hydrogen or C₁₋₆-alkyl,
n is an integer >1 and
with the proviso that the molecular weight of the polymer is between 500 and 1 000 000.

11. Poly-{1-methyl-1-[2-(phenoxymethyl)-1,4,6-trioxaspiro[4.4]nonane-7-yl]methoxycarbonyl]ethylene} having the formula 4 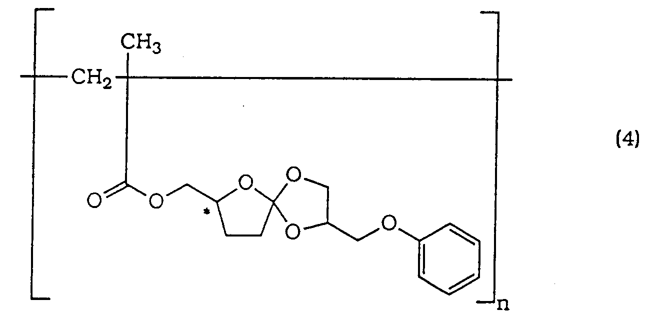 and a molecular weight in thre range of 5 000 to 50 000.

12. Poly-{1-methyl-1-[2-(phenoxymethyl)-1,4,6-trioxaspiro[4.4]nonane-7-yl]carbonyloxy-ethoxycarbonyl]ethylene} having the formula 8 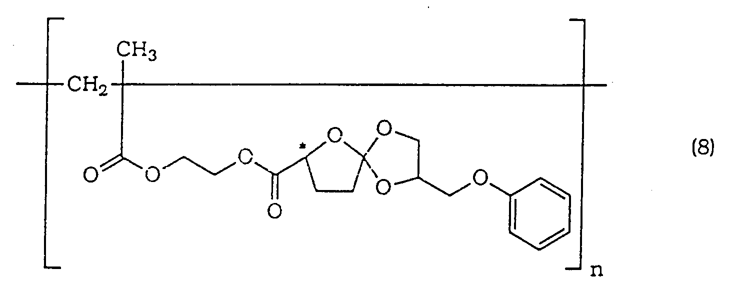 and a molecular weight in thre range of 5 000 to 50 000.

13. The use of the polymers according to claims 9 to 12 for strain free composites, high strength adhesives and dental filling materials.

## Patentansprüche

1. Verfahren zur Herstellung von Polymeren mit sich wiederholenden Einheiten, welche Spiroorthoestergruppen umfassen, der folgenden allgemeinen Formel I 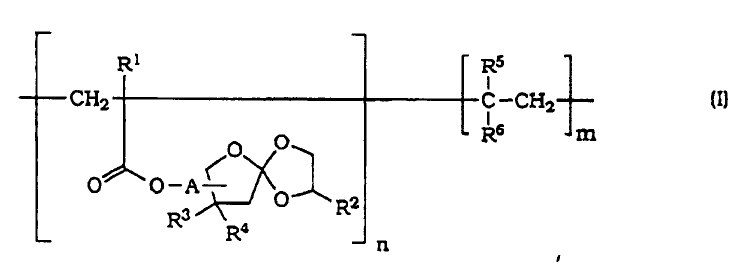 worin
A C₁₋₆-Alkylen, C₁₋₆-Alkylenoxycarbonyl oder eine Sauerstoff-Kohlenstoff-Bindung darstellt,
R¹ Wasserstoff oder Methyl bedeutet,
R² für C₁₋₆-Alkyl oder C₁₋₆-Alkyl, welches durch C₁₋₆-Alkoxy oder Aryloxy substituiert ist, steht,
R³ und R⁴ unabhängig Wasserstoff oder C₁₋₆-Alkyl sind,
R⁵ Wasserstoff oder Methyl bedeutet,
R⁶ Wasserstoff, Methyl, Phenyl, Carboxy, Carboxy-C₁₋₆-alkyl, Carboxamido oder Cyano darstellt,
n eine ganze Zahl >1 ist, und
m 0 oder eine ganze Zahl >1 ist, mit der Maßgabe, daß das Molekulargewicht des Polymers von 500 und 1.000.000 beträgt,
gekennzeichnet durch Umsetzen eines Polymers mit sich wiederholenden Einheiten, welche Lactongruppen umfassen, der folgenden allgemeinen Formel II 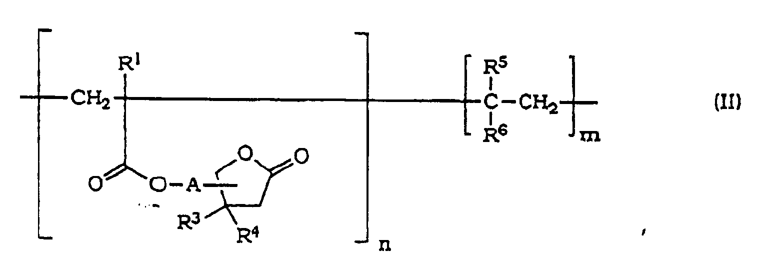 worin A, R¹, R³, R⁴, R⁵, R⁶, n und m wie vorstehend definiert sind, mit einer Oxiranverbindung der folgenden allgemeinen Formel III 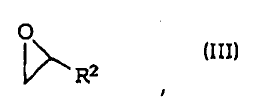 worin R² wie vorstehend definiert ist.

2. Verfahren nach Anspruch 1, dadurch gekennzeichnet, daß die Reaktion in einem polaren organischen Lösungsmittel und in Gegenwart eines Katalysators ausgeführt wird.

3. Verfahren nach Anspruch 2, dadurch gekennzeichnet, daß die Reaktion in einem halogenierten organischen Lösungsmittel und in Gegenwart eines Lewis-Säure-Katalysators ausgeführt wird.

4. Verfahren nach Anspruch 3, dadurch gekennzeichnet, daß die Reaktion in Dichlormethan und in Gegenwart von Bortrifluoridetherat als Katalysator ausgeführt wird.

5. Verfahren nach einem der Ansprüche 1 bis 4, dadurch gekennzeichnet, daß die Reaktion bei Raumtemperatur ausgeführt wird.

6. Verfahren nach einem der Ansprüche 1 bis 5, dadurch gekennzeichnet, daß die Ausgangsverbindung der allgemeinen Formel II durch radikalische Polymerisation eines 2-Oxo-tetrahydrofuran-Derivats der folgenden allgemeinen Formel IV 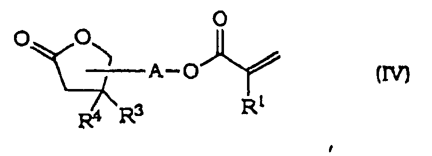 worin A, R¹, R³ und R⁴ wie in Anspruch 1 definiert sind, gewünschtenfalls in Gegenwart eines copolymerisierbaren Monomers der allgemeinen Formel V 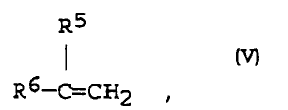 worin R⁵ und R⁶ wie in Anspruch 1 definiert sind, hergestellt wird.

7. Verfahren nach Anspruch 6, dadurch gekennzeichnet, daß die Polymerisation in Lösung in einem inerten organischen Lösungsmittel und in Gegenwart eines Radikale ausbildenden Katalysators ausgeführt wird.

8. Verfahren nach Anspruch 7, dadurch gekennzeichnet, daß ein aromatisches Lösungsmittel und ein Peroxidkatalysator oder Azobisisobutyronitril verwendet werden.

9. Copolymere mit sich wiederholenden Einheiten, welche Spiroorthoestergruppen umfassen, der folgenden allgemeinen Formel I 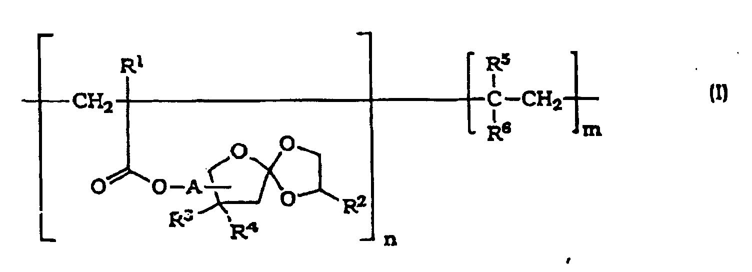 worin
A C₁₋₆-Alkylen, C₁₋₆-Alkylenoxycarbonyl oder eine Sauerstoff-Kohlenstoff-Bindung darstellt,
R¹ Wasserstoff oder Methyl bedeutet,
R² für C₁₋₆-Alkyl oder C₁₋₆-Alkyl, welches durch C₁₋₆-Alkoxy oder Aryloxy substituiert ist, steht,
R³ und R⁴ unabhängig Wasserstoff oder C₁₋₆-Alkyl sind,
R⁵ Wasserstoff oder Methyl bedeutet,
R⁶ Wasserstoff, Methyl, Phenyl, Carboxy, Carboxy-C₁₋₆-alkyl, Carboxamido oder Cyano darstellt,
n eine ganze Zahl >1 ist, und
m eine ganze Zahl ≥1 ist, mit der Maßgabe, daß das Molekulargewicht des Polymers von 500 und 1.000.000 beträgt.

10. Homopolymere mit sich wiederholenden Einheiten, welche Spiroorthoestergruppen umfassen, der folgenden allgemeinen Formel VI 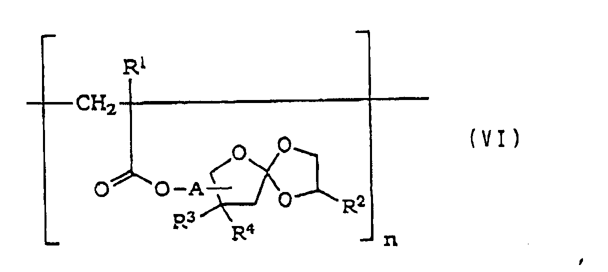 worin
A C₁₋₆-Alkylen oder C₁₋₆-Alkylenoxycarbonyl darstellt,
R¹ Wasserstoff oder Methyl bedeutet,
R² für C₁₋₆-Alkyl oder C₁₋₆-Alkyl, welches durch C₁₋₆-Alkoxy oder Aryloxy substituiert ist, steht,
R³ und R⁴ unabhängig Wasserstoff oder C₁₋₆-Alkyl sind,
n eine ganze Zahl >1 ist, und mit der Maßgabe, daß das Molekulargewicht des Polymers von 500 und 1.000.000 beträgt.

11. Poly-{1-methyl-1-[2-(phenoxymethyl)-1,4,6-trioxaspiro[4.4]nonan-7-yl]methoxycarbonyl]ethylen} der Formel 4 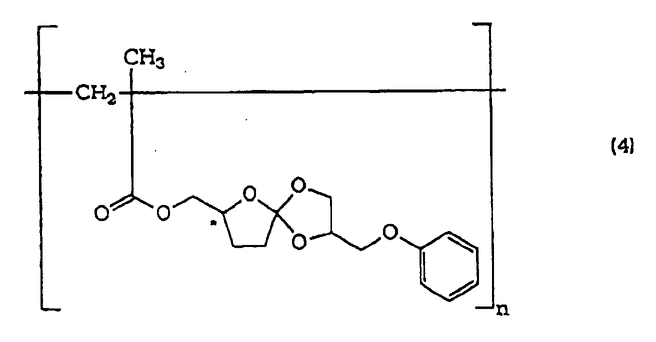 und mit einem Molekulargewicht im Bereich von 5.000 bis 50.000.

12. Poly-{1-methyl-1-[2-(phenoxymethyl)-1,4,6-trioxaspiro[4.4]nonan-7-yl]carbonyloxy-ethoxycarbonyl]ethylen} der Formel 8 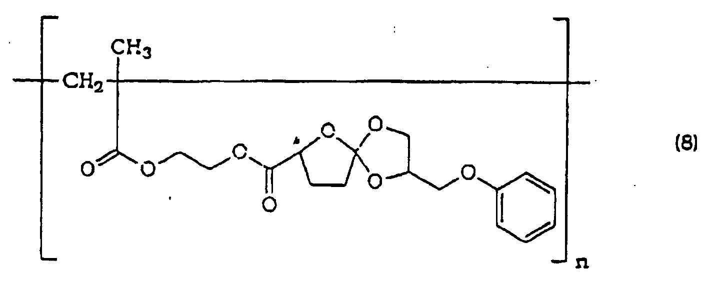 und mit einem Molekulargewicht im Bereich von 5.000 bis 50.000.

13. Verwendung der Polymere nach den Ansprüchen 9 bis 12 für spannungsfreie Verbundwerkstoffe, hochfeste Klebstoffe und Dentalfüllmaterialien.

## Revendications

1. Procédé pour la fabrication de polymères ayant des motifs récurrents comprenant des groupes spiro orthoester de formule générale I suivante 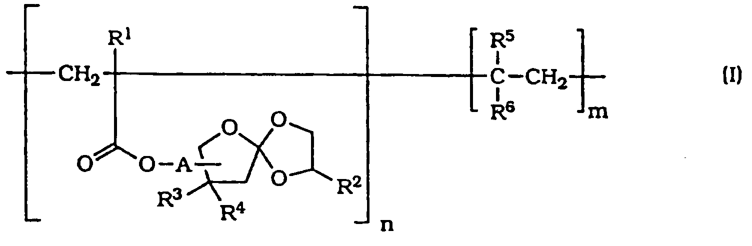 dans laquelle
A est un groupe alkylène en C₁ à C₆, alkylène(en C₁ à C₆)oxycarbonyle ou une liaison oxygène-carbone,
R¹ est un hydrogène ou un groupe méthyle,
R² est un groupe alkyle C₁ à C₆ ou alkyle en C₁ à C₆ substitué par un groupe alcoxy en C₁ à C₆ ou aryloxy,
R³ et R⁴ sont indépendamment un hydrogène ou un groupe alkyle en C₁ à C₆,
R⁵ est un hydrogène ou un groupe méthyle,
R⁶ est un hydrogène, un groupe méthyle, phényle, carboxy, carboxyalkyle en C₁ à C₆, carboxamido ou cyano,
n est un entier > 1 et
m est 0 ou un entier > 1, étant entendu que le poids moléculaire du polymère est entre 500 et 1 000 000,
caractérisé par la réaction d'un polymère ayant des motifs récurrents comprenant des groupes lactone de formule générale II suivante 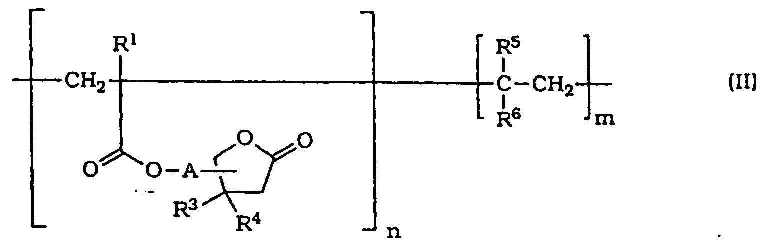 dans laquelle A, R¹, R³, R⁴, R⁵, R⁶, n et m sont tels que définis ci-dessus, avec un composé oxiranne de formule générale III suivante 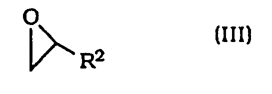 dans laquelle R² est tel que défini ci-dessus.

2. Procédé selon la revendication 1, caractérisé en ce que la réaction est effectuée dans un solvant organique polaire et en présence d'un catalyseur.

3. Procédé selon la revendication 2, caractérisé en ce que la réaction est effectuée dans un solvant organique halogéné et en présence d'un catalyseur de type acide de Lewis.

4. Procédé selon la revendication 3, caractérisé en ce que la réaction est effectuée dans du dichlorométhane et en présence d'éthérate de trifluorure de bore en tant que catalyseur.

5. Procédé selon l'une quelconque des revendications 1 à 4, caractérisé en ce que la réaction est effectuée à température ambiante.

6. Procédé selon l'une quelconque des revendications 1 à 5, caractérisé en ce que le composé de départ de formule générale II est fabriqué par polymérisation radicalaire d'un dérivé 2-oxo-tétrahydrofuranne de formule générale IV suivante 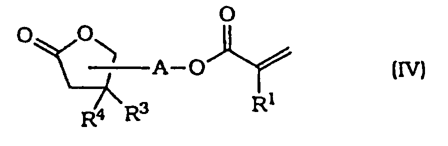 dans laquelle A, R¹, R³ et R⁴ sont tels que définis dans la revendication 1, si on le souhaite en présence d'un monomère copolymérisable de formule générale V 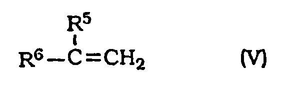 dans laquelle R⁵ et R⁶ sont tels que définis dans la revendication 1.

7. Procédé selon la revendication 6, caractérisé en ce que la polymérisation est effectuée en solution dans un solvant organique inerte et en présence d'un catalyseur radicalaire.

8. Procédé selon la revendication 7, caractérisé en ce qu'on utilise un solvant aromatique et un catalyseur peroxyde ou de l'azobisisobutyronitrile.

9. Copolymères ayant des motifs récurrents comprenant des groupes spiro orthoester de formule générale I 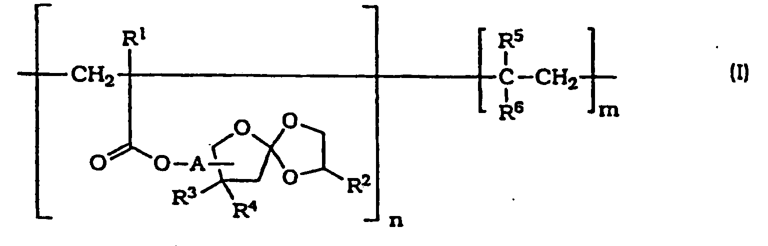 dans laquelle
A est un groupe alkylène en C₁ à C₆, alkylène(en C₁ à C₆)oxycarbonyle ou une liaison oxygène-carbone,
R¹ est un hydrogène ou un groupe méthyle,
R² est un groupe alkyle C₁ à C₆ ou alkyle en C₁ à C₆ substitué par un groupe alcoxy en C₁ à C₆ ou aryloxy,
R³ et R⁴ sont indépendamment un hydrogène ou un groupe alkyle en C₁ à C₆,
R⁵ est un hydrogène ou un groupe méthyle,
R⁶ est un hydrogène, un groupe méthyle, phényle, carboxy, carboxyalkyle en C₁ à C₆, carboxamido ou cyano,
n est un entier > 1 et
m est un entier ≥ 1, étant entendu que le poids moléculaire du polymère est entre 500 et 1 000 000.

10. Homopolymères ayant des motifs récurrents comprenant des groupes spiro orthoester de formule générale (VI) suivante 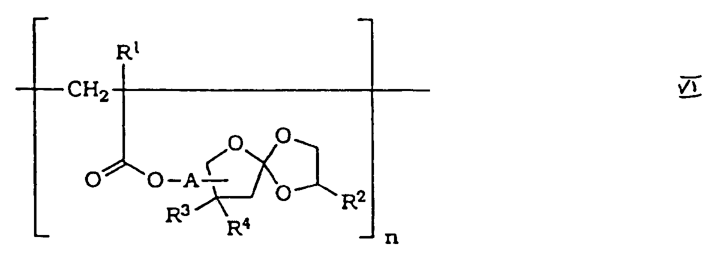 dans laquelle
A est un groupe alkylène en C₁ à C₆ ou alkylène(en C₁ à C₆)oxycarbonyle,
R¹ est un hydrogène ou un groupe méthyle,
R² est un groupe alkyle C₁ à C₆ ou alkyle en C₁ à C₆ substitué par un groupe alcoxy en C₁ à C₆ ou aryloxy,
R³ et R⁴ sont indépendamment un hydrogène ou un groupe alkyle en C₁ à C₆,
n est un entier > 1 et
étant entendu que le poids moléculaire du polymère est entre 500 et 1 000 000.

11. Poly-{1-méthyl-1-[2-(phénoxyméthyl)-1,4,6-trioxaspiro[4.4]nonane-7-yl]méthoxycarbonyl]éthylène} ayant la formule 4 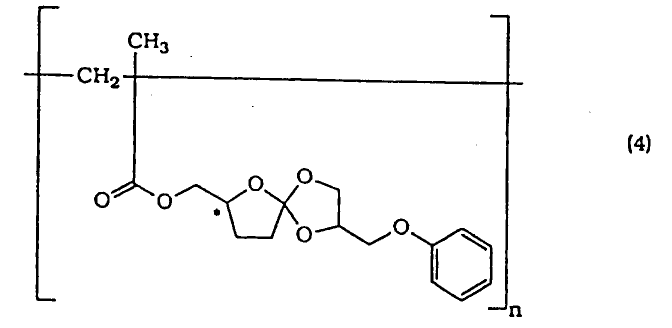 et un poids moléculaire dans la gamme de 5 000 à 50 000.

12. Poly-{1-méthyl-1-[2-(phénoxyméthyl)-1,4,6-trioxaspiro[4.4]nonane-7-yl]carbonyloxyéthoxycarbonyl]éthylène} ayant la formule 8 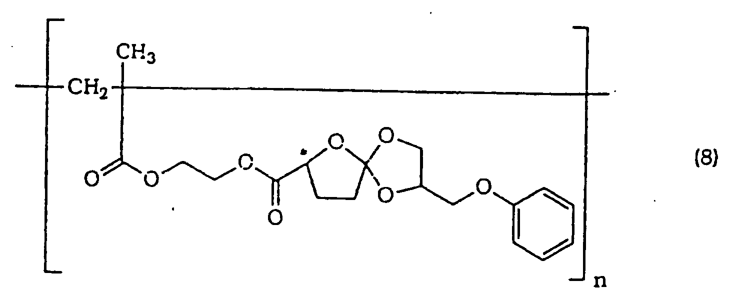 et un poids moléculaire dans la gamme de 5 000 à 50 000.

13. Utilisation des polymères selon les revendications 9 à 12, pour des composites exempts de déformation, des adhésifs à haute résistance et des pâtes d'obturation dentaire.
